# EUROPÄISCHE PATENTSCHRIFT

(11) **EP 3 206 928 B1**
(45) Veröffentlichungstag und Bekanntmachung des Hinweises auf die Patenterteilung: **28.09.2022**
(21) Anmeldenummer: 16794304.2
(22) Anmeldetag: 09.11.2016
(51) Int. Cl.: B60L 15/20

(54) **VERFAHREN ZUM ERMITTELN EINER FAHRTREICHWEITE EINES KRAFTFAHRZEUGS UND KRAFTFAHRZEUG**
METHOD FOR DETERMINING A DRIVING RANGE OF A MOTOR VEHICLE, AND MOTOR VEHICLE
PROCÉDÉ DE DÉTERMINATION DE L'AUTONOMIE D'UN VÉHICULE AUTOMOBILE ET VÉHICULE AUTOMOBILE

(30) Priorität: 04.12.2015 DE 102015015743
(43) Veröffentlichungstag der Anmeldung: 23.08.2017
(73) Patentinhaber: Audi AG, 85045 Ingolstadt (DE)
(72) Erfinder: SCHULLER, Florian, 85737 Ismaning (DE); HAUBNER, Florian, 85049 Ingolstadt (DE)
(86) Internationale Anmeldenummer: PCT/EP2016/077046
(87) Internationale Veröffentlichungsnummer: WO 2017/092989

(56) Entgegenhaltungen:
- DE-A1-102015 202 837
- US-A1- 2010 138 142
- US-A1- 2014 214 267
- US-A1- 2015 161 830

## Beschreibung

Die Erfindung betrifft ein Verfahren zum Ermitteln einer Fahrtreichweite eines Kraftfahrzeugs gemäß dem Oberbegriff von Patentanspruch 1 sowie ein Kraftfahrzeug gemäß dem Oberbegriff von Patentanspruch 8.

Eine maximal verfügbare Fahrtreichweite von Kraftfahrzeugen hängt unter anderem von den Umgebungsbedingungen des Kraftfahrzeugs ab. Mit Fahrtreichweite des Kraftfahrzeugs ist insbesondere eine verbleibende Restenergiemenge, wie beispielsweise eine Kraftstoffmenge bei einem Kraftfahrzeug mit Verbrennungsmotor oder eine in einer Batterie eines elektrischen Kraftfahrzeugs gespeicherte Energie, gemeint. Da sich die Umgebungsbedingungen in Abhängigkeit von der Position des Kraftfahrzeugs oder dem Wetter kontinuierlich ändern können, kann sich auch die vorab bestimmte Fahrtreichweite entsprechend verändern.

Um die Fahrtreichweite eines Kraftfahrzeugs in Abhängigkeit der Umgebungsbedingungen des Kraftfahrzeugs anzupassen, ist es bekannt, eine Änderung der Temperatur in einer Umgebung des Kraftfahrzeugs durch fahrzeugeigene Temperatursensoren zu bestimmen. In Abhängigkeit von der Temperaturänderung kann auf eine Änderung des Leistungsbedarfs des Kraftfahrzeugs rückgeschlossen werden. Nachteilig an diesem Verfahren ist es, dass gerade zu einem Beginn einer Fahrt des Kraftfahrzeugs die Temperatursensoren in gewissen zeitlichen Abständen ihre erfassten Werte korrigieren, solange bis sich der Wert einem konstanten Wert annähert. Dadurch kann die tatsächliche Fahrtreichweite erst nach einer bestimmten Dauer nach dem Fahrtbeginn, also zeitverzögert, bestimmt werden.

Um die Fahrtreichweite eines Kraftfahrzeugs zuverlässiger bestimmen zu können, schlägt die DE 10 2009 048 821 A1 ein Verfahren zur Ermittlung der Reichweite eines einen Energiespeicher zur Antriebsenergieversorgung aufweisenden Fahrzeugs vor. Das Verfahren berücksichtigt dabei zwei unterschiedliche Parameter. Einer der beiden Parameter charakterisiert eine Zustandsgröße des Energiespeichers. Der andere Parameter wird aus Informationen, welche unter anderem das Wetter betreffen, gewonnen.

In der DE 10 2009 016 869 A1 ist ein Verfahren zum Betreiben eines Fahrzeugs beschrieben, welches einen elektrischen Fahrantrieb und wenigstens eine wiederaufladbare und austauschbare Elektroenergieeinheit aufweist. Bei dem Verfahren wird eine Reichweite des Fahrzeugs auf der Grundlage des Ladezustands der Elektroenergieeinheit berechnet. Ferner sind bei dem Verfahren eine Wetterinformationseinrichtung zum Empfangen und zur Auswertung von Wetterinformationen und eine Wetterdatenerfassungseinrichtung zum Erfassen von Wetterdaten vorgesehen. Auf diese Weise ist es möglich, die Wetterdaten zur Berechnung der Reichweite heranzuziehen.

Aus der DE 10 2011 108 385 B3 geht ein Verfahren zum Bestimmen einer Fahrtreichweite eines Kraftwagens hervor, welches die Fahrtreichweite auf Grundlage von fahrzeugabhängigen und fahrzeugunabhängigen Parameterwerten bestimmt. Die fahrzeugabhängigen und fahrzeugunabhängigen Parameterwerte werden durch den Kraftwagen erfasst und an einen Server übermittelt.

Aus der DE 10 2014 204 308 A1 geht ein Verfahren zur Reichweitenschätzung eines Fahrzeugs mit einem elektronischen Antrieb hervor. Bei dem Verfahren basiert die Reichweitenschätzung auf einem Energieverbrauchsmodell des Fahrzeugs, einer dem Fahrzeug in einem Energiespeicher zur Verfügung stehenden Energiemenge und einer Straßendatenbasis. Die Reichweitenschätzung erfolgt für eine vom Fahrzeug geplante Fahrstrecke unter Berücksichtigung aktueller ortsbezogener Umgebungsdaten entlang der geplanten Fahrstrecke.

In der DE 10 2013 225 563 A1 ist ein Verfahren zur Überwachung mindestens eines Sensors eines Fahrzeugs beschrieben. Bei dem Verfahren werden Messwerte des Sensors mit Messwerten mindestens eines Vergleichsfahrzeugs verglichen.

Aus der DE 102011 116 115 A1 geht ein Verfahren zum Ermitteln einer Reichweite eines Fahrzeugs hervor, welches zum Antrieb einen Elektromotor umfasst. Bei dem Verfahren wird zunächst eine von dem Fahrzeug zu befahrende Fahrroute bestimmt oder vorgegeben. In einem weiteren Verfahrensschritt erfolgt das Bestimmen von Rekuperationsereignissen auf der Fahrroute. Schließlich wird die Reichweite in Abhängigkeit von der Fahrroute, den Rekuperationsereignissen und Umweltbedingungen auf der Fahrroute ermittelt.

Dokument US 2014/214267 A1 offenbart ein Verfahren zur Vorhersage eines Energieverbrauchs für ein erstes Fahrzeug. Bei dem Verfahren wird ein Energieverbrauch in mindestens einem zweiten, auf einem Streckenabschnitt fahrenden Fahrzeug gemessen, wobei der zum Befahren dieses Streckenabschnitts notwendige Energieverbrauch des ersten Fahrzeugs auf Basis mindestens eines gemessenen Energieverbrauchs des zweiten Fahrzeugs vorhergesagt wird.

Der Nachteil derartiger Verfahren besteht darin, dass die Daten, welche von einer Servervorrichtung bezogen werden, durch die Servervorrichtung nur gebietsweise erfasst werden und keine ortsspezifischen Informationen enthalten.

Aufgabe der vorliegenden Erfindung ist es, ein Verfahren bereitzustellen, welches eine Fahrtreichweite eines Kraftfahrzeugs besonders zuverlässig bestimmt.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Der Erfindung liegt die Erkenntnis zugrunde, dass die im Stand der Technik von einem Server bezogenen Daten verbesserungswürdig sind.

Demgemäß ist in einem ersten Aspekt der Erfindung ein Verfahren zum Ermitteln einer Fahrtreichweite eines Kraftfahrzeugs bereitgestellt. Bei dem Verfahren werden fahrzeugexterne Daten empfangen. Die fahrzeugexternen Daten umfassen dabei zumindest einen Wetterparameterwert. Ferner wird ein fahrzeugabhängiger Parameterwert in Abhängigkeit der fahrzeugexternen Daten ermittelt. In Abhängigkeit des fahrzeugabhängigen Parameterwertes wird die Fahrtreichweite des Kraftfahrzeugs bestimmt. Das Verfahren zeichnet sich dadurch aus, dass die fahrzeugexternen Daten von mehreren weiteren Kraftfahrzeugen bezogen werden.

Erfindungsgemäß werden die empfangenen fahrzeugexternen Daten vor dem Bestimmen des fahrzeugabhängigen Parameterwertes mittels einer Konfidenzschätzung überprüft. Unter einer Konfidenzschätzung ist bevorzugt eine Wahrscheinlichkeitsberechnung zu verstehen, welche ein Konfidenzintervall berücksichtigt. Ein Konfidenzintervall ist ein Intervall aus der Statistik, welches die Präzision der Lageschätzung eines Parameters angibt. Die fahrzeugexternen Daten der mehreren weiteren Kraftfahrzeuge werden der Konfidenzschätzung unterzogen. Die Konfidenzschätzung berücksichtigt jeweils eine Fahrzeit der mehreren weiteren Kraftfahrzeuge und/oder eine Mindestanzahl der mehreren weiteren Kraftfahrzeuge. Wenn die mehreren weiteren Kraftfahrzeuge beispielsweise ausreichend lange, d.h. für eine vorbestimmte Zeitspanne, fahren und eine Mindestanzahl von Kraftfahrzeugen vorhanden ist, können die fahrzeugexternen Daten durch die Konfidenzschätzung als ausreichend zuverlässig eingeschätzt werden. Durch die Konfidenzschätzung kann also bestimmt werden, ob die erfassten fahrzeugexternen Daten in dem Konfidenzintervall liegen oder nicht. Mit anderen Worten können die fahrzeugexternen Daten durch die Konfidenzschätzung selektiert werden.

Wenn nämlich zur Fahrtreichweitenbestimmung Daten von einer Servervorrichtung bezogen werden, so sind die bezogenen Daten oft ungenau, da sich der Erfassungsbereich der Servervorrichtung üblicherweise auf ein größeres Gebiet bezieht und die Servervorrichtung dadurch keine ortsspezifischen Informationen bereitstellen kann.

Der Bezug von Daten von den weiteren Kraftfahrzeugen hat den Vorteil, dass die weiteren Kraftfahrzeuge ortsspezifische Daten übermitteln können, und zwar zu dem Ort in einer näheren Umgebung der Kraftfahrzeuge, an dem sie sich gerade befinden. Dadurch kann die Fahrtreichweite zu jeder Zeit und an jedem Ort, an dem die Kraftfahrzeuge in Betrieb gesetzt werden, besonders zuverlässig bestimmt werden.

Der Bezug von Daten von den weiteren Kraftfahrzeugen hat ferner den Vorteil, dass die weiteren Kraftfahrzeuge schon länger unterwegs ist und sich deren Sensoren zur Erfassung der tatsächlichen Umgebungstemperatur bereits eingestellt haben. Dadurch kann die Fahrtreichweite des Kraftfahrzeugs bereits zu Fahrtbeginn bestimmt werden, ohne dass das Kraftfahrzeug auf die eigene Sensorik angewiesen ist.

Beispielsweise können die fahrzeugexternen Daten dem Kraftfahrzeug von den weiteren Kraftfahrzeugen über eine Car-to-Car-Kommunikation übertragen werden. Eine Car-to-Car-Kommunikation (*Englisch* für "Auto zu Auto-Kommunikation") bezeichnet den Austausch von Informationen und/oder Daten, in diesem Fall von fahrzeugexternen Daten, zwischen den weiteren Kraftfahrzeugen und dem Kraftfahrzeug. Die Car-to-Car-Kommunikation erfolgt beispielsweise über einen WLAN-Standard oder Wifi-Standard. Das Kraftfahrzeug kann die fahrzeugexternen Daten von den weiteren Kraftfahrzeugen in einer Umgebung des Kraftfahrzeugs, insbesondere in einem Umkreis zwischen 5 m und 20 km, empfangen. Mit fahrzeugextern ist hier insbesondere gemeint, dass derartige Daten einen Wert einer Umgebung des Kraftfahrzeugs betreffen. Die fahrzeugexternen Daten werden herangezogen, um den fahrzeugabhängigen Parameterwert zu ermitteln. Mit fahrzeugabhängig ist hier insbesondere gemeint, dass ein derartiger Parameterwert einen Wert des Kraftfahrzeugs betrifft.

Eine Ausführungsform der Erfindung sieht vor, dass als der fahrzeugabhängige Parameterwert ein Energiebedarf pro Streckenabschnitt und/oder pro Zeiteinheit des Kraftfahrzeugs, insbesondere zur Kühlung und/oder Klimatisierung, bestimmt wird. Auf Basis der empfangenen fahrzeugexternen Daten kann auf den Energiebedarf des Kraftfahrzeugs pro Streckenabschnitt und/oder pro Zeiteinheit rückgeschlossen werden. Der Energiebedarf zur Kühlung umfasst beispielsweise die Leistung, die aufgebracht wird, um einen Motor und/oder weitere Kraftfahrzeugkomponenten im Betrieb des Kraftfahrzeugs zu kühlen. Der Energiebedarf zur Klimatisierung umfasst beispielsweise die Leistung, die aufgebracht wird, um eine Klimaanlage des Kraftfahrzeugs zur Klimatisierung eines Fahrgastraums des Kraftfahrzeugs während des Betriebs des Kraftfahrzeugs zu betreiben. Mit anderen Worten kann in Abhängigkeit des fahrzeugabhängigen Parameterwertes ein Leistungsbedarf des Thermomanagements des Kraftfahrzeugs ermittelt werden. Dadurch ergibt sich der Vorteil, dass die Reichweitenprädiktion des Kraftfahrzeugs verbessert werden kann.

In vorteilhafter Weise charakterisiert der Wetterparameterwert eine Umgebungstemperatur. Mit Wetterparameterwert ist insbesondere ein Wert zu verstehen, welcher einen Zustand der Atmosphäre in der Umgebung des Kraftfahrzeugs beschreibt. Mit Umgebungstemperatur ist insbesondere eine Temperatur in einer Umgebung des Kraftfahrzeugs gemeint. Mit Umgebung ist bevorzugt ein Raum oder ein Gebiet gemeint, welcher oder welches das Kraftfahrzeug umgibt. Der Wetterparameterwert kann bevorzugt auch eine Windstärke und/oder eine Luftfeuchtigkeit in der Umgebung des Kraftfahrzeugs umfassen. Beispielsweise können Sensoren der weiteren Kraftfahrzeuge eine Umgebungstemperatur erfassen und diese über Car-to-Car-Kommunikation an das Kraftfahrzeug übermitteln. Da der Wetterparameterwert eine direkte Umgebung des Kraftfahrzeugs betrifft, kann auf besonders einfache und zuverlässige Art und Weise eine Fahrtreichweite bestimmt werden.

In vorteilhafter Weise umfassen die fahrzeugexternen Daten mindestens einen Energiebedarf der weiteren Kraftfahrzeuge pro Streckeneinheit und/oder pro Zeiteinheit. Beispielsweise kann der Energiebedarf eine Leistungsprädiktion eines Thermomanagements der weiteren Kraftfahrzeuge umfassen. Mit Leistungsprädiktion des Thermomanagements ist insbesondere ein Energiebedarf zur Kühlung und/oder zu Klimatisierung der weiteren Kraftfahrzeuge gemeint.

Für die weiteren Kraftfahrzeuge, welche sich bevorzugt in einer Umgebung des Kraftfahrzeugs befinden, können annähernd die gleichen Umgebungsbedingungen, wie beispielsweise die Umgebungstemperatur, wie für das Kraftfahrzeug herrschen. Beispielsweise können die weiteren Kraftfahrzeuge ihren Energiebedarf aus Umgebungsbedingungen herleiten, welche durch eine fahrzeugeigene Sensorik der weiteren Kraftfahrzeuge erfasst werden. Die weiteren Kraftfahrzeuge können dazu bevorzugt einen Temperatursensor zum Erfassen einer Umgebungstemperatur aufweisen. Ferner können die weiteren Kraftfahrzeuge eine Vorrichtung aufweisen, welche dazu eingerichtet ist, in Abhängigkeit der erfassten Temperatur einen Energiebedarf pro Zeiteinheit und/oder pro Streckenabschnitt zu ermitteln und diesen Wert des Energiebedarfs an das Kraftfahrzeug zu übermitteln.

Dadurch ergibt sich der Vorteil, dass die Fahrtreichweite nicht nur auf Basis eines Wetterparameterwertes in einer Umgebung des Kraftfahrzeugs, sondern auch konkret über einen Energiebedarfswert der weiteren Kraftfahrzeuge ermittelt werden kann. Dadurch ergibt sich der Vorteil, dass auf besonders einfache und zuverlässige Art und Weise eine Fahrtreichweite bestimmt werden kann.

In vorteilhafter Weise können die fahrzeugexternen Daten weiterhin von einer Servervorrichtung bezogen werden. Bei der Servervorrichtung kann es sich beispielsweise um eine Servervorrichtung einer Messstation, insbesondere eine Wetterstation, handeln. Zum Beispiel kann die Wetterstation aktuelle und/oder zukünftige Wetterinformationen erfassen und bereitstellen. Aktuelle und/oder zukünftige Wetterdaten können auch über eine Servervorrichtung des Internets bereitgestellt sein. Die Daten von der Servervorrichtung werden bevorzugt kontinuierlich, d.h. in regelmäßigen Zeitabständen, aktualisiert. Zusätzlich können also zu den von den weiteren Kraftfahrzeugen bezogenen Daten die Daten von einer Servervorrichtung berücksichtigt werden. Dadurch kann die Genauigkeit der Daten erhöht werden und damit die Zuverlässigkeit der Bestimmung der Fahrtreichweite erhöht werden.

Eine weitere Ausführungsform der Erfindung sieht vor, dass nach dem Bestimmen der Fahrtreichweite des Kraftfahrzeugs in Abhängigkeit des fahrzeugabhängigen Parameterwertes ein mit dem Wetterparameterwert korrespondierender aktueller Wetterparameterwert in einer Umgebung des Kraftfahrzeugs erfasst wird, wobei zwischen dem erfassten aktuellen Wetterparameterwert und dem Wetterparameterwert ein Differenzwert bestimmt wird und der Wetterparameterwert an den erfassten aktuellen Wetterparameterwert angepasst wird, wenn der Differenzwert einen vorgegebenen Schwellwert überschreitet. Mit einem Differenzwert ist insbesondere der Wert gemeint, welcher sich bei einer Subtraktion aus dem Wetterparameterwert und dem aktuellen Wetterparameterwert ergibt. Ist der ermittelte Differenzwert größer als ein vorbestimmter Differenzwert, also ein Schwellwert, so wird der Wetterparameterwert bevorzugt an den aktuellen Parameterwert angeglichen. Der aktuelle Wetterparameterwert kann also bevorzugt zu einer Kalibrierung des Wetterparameterwertes herangezogen beziehungsweise genutzt werden.

In vorteilhafter Weise wird der aktuelle Wetterparameterwert durch eine Erfassungseinrichtung des Kraftfahrzeugs erfasst, wobei der aktuelle Wetterparameterwert eine Temperatur umfasst. Bei der Erfassungseinrichtung kann es sich beispielsweise um einen Temperatursensor handeln. Dadurch kann in einer direkten Umgebung des Kraftfahrzeugs ein Wetterparameterwert erfasst werden. Beispielsweise kann die mit dem Temperatursensor gemessene Temperatur zur langfristigen feinen Korrektur des Wetterparameterwertes und damit der Fahrtreichweite verwendet werden. Dazu kann beispielsweise beobachtet werden, inwieweit sich der von der Erfassungseinrichtung des Kraftfahrzeugs erfasste aktuelle Wetterparameterwert an den Wetterparameterwert der erfassten fahrzeugexternen Daten annähert.

Zu der Erfindung gehört auch ein Kraftfahrzeug. Das Kraftfahrzeug ist bevorzugt als Elektrofahrzeug ausgebildet. Das Kraftfahrzeug weist eine Empfangseinrichtung zum Empfangen von fahrzeugexternen Daten auf, wobei die fahrzeugexternen Daten zumindest einen Wetterparameterwert umfassen. Ferner umfasst das Kraftfahrzeug eine Auswerteeinrichtung, welche dazu eingerichtet ist, in Abhängigkeit der fahrzeugexternen Daten einen fahrzeugabhängigen Parameterwert zu ermitteln. Die Auswerteeinrichtung ist ferner dazu eingerichtet, eine Fahrtreichweite des Kraftfahrzeugs in Abhängigkeit des fahrzeugabhängigen Parameterwertes zu bestimmen. Die fahrzeugexternen Daten sind dabei von mehreren weiteren Kraftfahrzeugen bereitgestellt. Die Auswerteeinrichtung ist ferner dazu eingerichtet, die empfangenen fahrzeugexternen Daten vor dem Bestimmen des fahrzeugabhängigen Parameterwertes mittels einer Konfidenzschätzung zu überprüfen, wobei die Konfidenzschätzung jeweils eine Fahrzeit der mehreren weiteren Kraftfahrzeuge und/oder eine Mindestanzahl der mehreren weiteren Kraftfahrzeuge berücksichtigt.

Die zuvor in Zusammenhang mit dem erfindungsgemäßen Verfahren beschriebenen Vorteile und Weiterbildungen können auch auf das erfindungsgemäße Kraftfahrzeug übertragen werden.

Ferner liegt der Erfindung die Erkenntnis zugrunde, dass bei Kraftfahrzeugen, welche zur Fahrtreichweitenbestimmung auf fahrzeugeigene Temperatursensoren zurückgreifen, die Temperatursensoren geschützt im Kraftfahrzeug verbaut sind und nicht direkt in Wechselwirkung mit der Umgebung des Kraftfahrzeugs stehen. Dadurch können die von den Temperatursensoren erfassten Werte bei schnelleren Änderungen der Umgebungstemperatur Abweichungen gegenüber der tatsächlichen Umgebungstemperatur aufweisen. Ferner kann dadurch eine Temperaturänderung auch erst nach einer vorbestimmten Zeit, beispielsweise nach zwei Minuten, mit der nötigen Präzision erfasst werden.

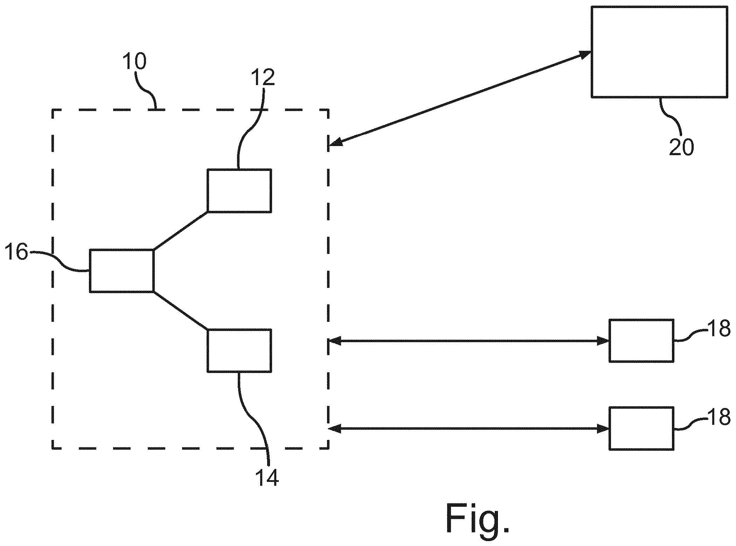

Im Folgenden ist ein Ausführungsbeispiel der Erfindung beschrieben. Hierzu zeigt die einzige Figur ein schematisches Blockdiagramm der an der Durchführung eines erfindungsgemäßen Verfahrens beteiligten Komponenten und Kommunikationswege.

Bei dem im Folgenden erläuterten Ausführungsbeispiel handelt es sich um eine bevorzugte Ausführungsform der Erfindung.

Die Figur zeigt ein Kraftfahrzeug 10. Bei dem Kraftfahrzeug 10 kann es sich um einen Kraftwagen, insbesondere um einen Personenkraftwagen, handeln. Das Kraftfahrzeug 10 umfasst eine Empfangseinrichtung 12, eine Erfassungseinrichtung 14 und eine Auswerteeinrichtung 16. Die Empfangseinrichtung 12 und die Erfassungseinrichtung 14 sind jeweils mit der Auswerteeinrichtung 16 gekoppelt. Mit gekoppelt ist hier insbesondere gemeint, dass die Empfangseinrichtung 12 und die Erfassungseinrichtung 14 signaltechnisch über eine Datenverbindung mit der Auswerteeinrichtung 16 verbunden sind.

Die Erfassungseinrichtung 14 ist dazu eingerichtet, Daten zu erfassen und an die Auswerteeinrichtung 16 zu übermitteln. Bei der Erfassungseinrichtung 14 kann es sich beispielsweise um einen Sensor handeln, welcher dazu eingerichtet ist, einen aktuellen Wetterparameterwert in einer Umgebung des Kraftfahrzeugs 10 zu erfassen. Bei dem Wetterparameterwert kann es sich zum Beispiel um eine Temperatur und/oder um eine Luftfeuchtigkeit und/oder um eine Windstärke in der Umgebung des Kraftfahrzeugs 10 handeln. Beispielsweise kann der Sensor als Temperatursensor ausgebildet sein und eine Temperatur in der Umgebung des Kraftfahrzeugs 10 erfassen.

Die Empfangseinrichtung 12 ist dazu eingerichtet, Daten zu empfangen und an die Auswerteeinrichtung 16 zu übermitteln. Die Empfangseinrichtung 12 kann fahrzeugexterne Daten von mehreren weiteren Kraftfahrzeugen 18 und/oder einer Servervorrichtung 20 abfragen. Wie der Figur zu entnehmen ist, können die fahrzeugexternen Daten von den mehreren weiteren Kraftfahrzeugen 18 übermittelt werden, d.h. jedes weitere Kraftfahrzeug 18 stellt für sich fahrzeugexterne Daten bereit. Die fahrzeugexternen Daten umfassen beispielsweise einen Wetterparameterwert, wie zum Beispiel eine Temperatur in einer Umgebung des Kraftfahrzeugs 10 und/oder der weiteren Kraftfahrzeuge 18.

Bei der Servervorrichtung 20 kann es sich beispielsweise um eine Servervorrichtung einer Messstation, insbesondere um eine Wetterstation, handeln.

Zum Beispiel kann die Wetterstation aktuelle und/oder zukünftige Wetterinformationen erfassen und bereitstellen. Die Empfangseinrichtung 12 des Kraftfahrzeugs 10 kann beispielsweise eine aktuelle Position des Kraftfahrzeugs 10 an die Servervorrichtung 20 übermitteln. Die Servervorrichtung 20 kann auf Basis der aktuellen Position beziehungsweise des Standorts des Kraftfahrzeugs 10 einen ortsspezifischen Temperaturwert als Wetterparameterwert übermitteln.

Die Datenübertragung der fahrzeugexternen Daten zwischen der Servervorrichtung 20 und der Empfangseinrichtung 12 erfolgt beispielsweise über bekannte Mobilfunkstandards zur Datenübertragung. Die Datenübertragung zwischen der Empfangseinrichtung 12 des Kraftfahrzeugs 10 und den weiteren Kraftfahrzeugen 18 erfolgt beispielsweise über einen WLAN-Standard oder Wifi-Standard.

Damit die weiteren Kraftfahrzeuge 18 überhaupt fahrzeugexterne Daten, wie beispielsweise einen Wetterparameterwert, bereitstellen können, können die weiteren Kraftfahrzeuge 18 eine weitere Erfassungseinrichtung (in Figur nicht gezeigt) zum Erfassen eines Wetterparameterwertes aufweisen und/oder den Wetterparameterwert von der Servervorrichtung 20 empfangen und an das Kraftfahrzeug 10 übermitteln. Wie die Erfassungseinrichtung 14 des Kraftfahrzeugs 10 kann auch die weitere Erfassungseinrichtung als Sensor, insbesondere als Temperatursensor, ausgebildet sein. Die weiteren Kraftfahrzeuge 18, welche mit dem Kraftfahrzeug 10 kommunizieren, können also beispielsweise mittels des Temperatursensors eine Temperatur erfassen und an das Kraftfahrzeug 10 übermitteln, welches den Temperaturwert durch die Empfangseinrichtung 12 empfängt und an die Auswerteeinrichtung 16 weiterleitet.

Bei der Auswerteeinrichtung 16 kann es sich beispielsweise um ein Steuergerät handeln, welches ferner mit geeigneten Speichereinheiten und/oder Kommunikationseinrichtungen und/oder Navigationssystemen und dergleichen über geeignete Bussysteme gekoppelt ist.

Die Auswerteeinrichtung 16 ist dazu eingerichtet, in Abhängigkeit der fahrzeugexternen Daten einen fahrzeugabhängigen Parameterwert zu ermitteln. Ferner ist die Auswerteeinrichtung 16 dazu eingerichtet, in Abhängigkeit des fahrzeugabhängigen Parameterwertes eine Fahrtreichweite des Kraftfahrzeugs 10 zu ermitteln. Die fahrzeugexternen Daten der mehreren weiteren Kraftfahrzeuge 18 werden durch die Auswerteeinrichtung 16 vor der Bestimmung des fahrzeugabhängigen Parameterwertes zunächst mittels einer Konfidenzschätzung überprüft.

Handelt es sich bei den fahrzeugexternen Daten beispielsweise um Temperaturwerte, welche von den weiteren Kraftfahrzeugen 18 bereitgestellt wurden, so kann die Auswerteeinrichtung 16 auf Basis dieser Temperaturwerte den Energiebedarf pro Zeiteinheit, beispielsweise für eine Klimatisierung des Fahrgastinnenraums, berechnen. Auf Basis des berechneten Energiebedarfs kann die Auswerteeinrichtung 16 dann eine Fahrtreichweite des Kraftfahrzeugs 10 berechnen beziehungsweise abschätzen.

Die ermittelte Fahrtreichweite kann von der Auswerteeinrichtung 16 beispielsweise an ein Navigationsgerät des Kraftfahrzeugs 10 übermittelt werden und auf einer Anzeigevorrichtung des Navigationsgeräts einem Fahrer des Kraftfahrzeugs 10 angezeigt werden.

Im Folgenden soll noch genauer auf die Konfidenzschätzung eingegangen werden:
Beispielsweise können als fahrzeugexterne Daten Temperaturwerte von den mehreren weiteren Kraftfahrzeugen 18 erfasst werden, welche einer Konfidenzschätzung unterzogen werden. Dazu kann die Auswerteeinrichtung 16 beispielsweise ein Temperaturintervall als Konfidenzintervall bestimmen, innerhalb dessen eine aktuelle Umgebungstemperatur liegt. Es werden dann nur die Temperaturwerte von der Auswerteeinrichtung 16 berücksichtigt, welche innerhalb dieses Temperaturintervalls liegen. Liegt beispielsweise eine Umgebungstemperatur bei 25°C, so kann das Temperaturintervall eine Intervallbreite von 20°C bis 30°C aufweisen. Wird von einem der weiteren Kraftfahrzeuge 18 nun beispielsweise ein Temperaturwert von 26°C übermittelt, so wird dieser von der Auswerteeinrichtung 16 zur Bestimmung des fahrzeugabhängigen Parameterwertes berücksichtigt. Wird von einem anderen der weiteren Kraftfahrzeuge 18 ein Temperaturwert von 15°C übermittelt, so wird dieser Temperaturwert bevorzugt von der Auswerteeinrichtung 16 aussortiert und nicht weiter berücksichtigt. Die Umgebungstemperatur zur Aufstellung eines Temperaturintervalls kann bevorzugt von der Servervorrichtung 20 bezogen werden.

Anstelle bei der Konfidenzschätzung ein Temperaturintervall aufzustellen, können die einzelnen von den weiteren Kraftfahrzeugen 18 bezogenen fahrzeugexternen Daten auch gewichtet werden. Beispielsweise können die fahrzeugexternen Daten auf eine vergangene Fahrzeit des jeweiligen weiteren Kraftfahrzeugs 18 bezogen werden. Je länger beispielsweise das weitere Kraftfahrzeug 18 bereits in Betrieb ist, desto genauer sind die von der weiteren Erfassungseinrichtung des weiteren Kraftfahrzeugs 18 erfassten Daten.

Die Auswerteeinrichtung 16 kann ferner aus den von den weiteren Kraftfahrzeugen 18 bezogenen Daten einen Mittelwert bilden und daraus den fahrzeugabhängigen Parameterwert bestimmen.

Insgesamt geht somit ein Verfahren zur Verbesserung der Reichweitenprädiktion durch Optimierung der Leistungsschätzung des Thermomanagements mit Hilfe von externen Temperaturinformationen und Leistungsbedarf-Informationen auf Basis von Webdaten und/oder Schwarmdaten, welche von mehreren weiteren Kraftfahrzeugen bezogen werden, hervor.

Die maximal verfügbare Reichweite von Elektrofahrzeugen hängt stark von den Umweltbedingungen ab und kann sich somit oft schlagartig verändern. Steht beispielsweise ein Elektroauto im Sommer bei einer Außentemperatur von 30°C in der kühlen Garage, geht das Fahrzeug von einer hohen Reichweite aus. Sobald das Auto aus der Garage fährt, wird der reale Energiebedarf für die dauerhafte Kühlung des Kraftfahrzeugs sichtbar und die prognostizierte hohe Reichweite nimmt schlagartig ab. In solchen Situationen soll der Kunde informiert werden, um die schlagartige Reichweitenänderung aufgrund der Umweltbedingungen zu erklären.

Aktuell wird die Information, ob sich die Umweltbedingungen schlagartig verändert haben, über die Beobachtung der Temperaturänderung und des Leitungsbedarfs bestimmt. Sind sowohl der Temperaturgradient als auch der Gradient des Leistungsbedarfs ausreichend groß, so wird von einer Änderung der Umweltbedingungen ausgegangen. Dabei müssen die beiden Parameter über ausreichend Zeit beobachtet werden, da der Temperatursensor geschützt verbaut ist und die Geschwindigkeit der Änderung somit mindert.

Nachteil des aktuellen Verfahrens ist die niedrige Zuverlässigkeit, da Temperaturgradienten auch in anderen Zusammenhängen auftreten. Der momentan eingesetzte Algorithmus kann nur zuverlässig im Winter bei kühlen Temperaturen verwendet werden, im Sommer werden zu viele Fehldetektionen verursacht. Ein weiterer Nachteil ist die Beobachtung der Daten über einen längeren Zeitraum (Größenordnung ca. 2 Minuten). Dadurch bekommt der Kunde die Information etwa um diese Zeit verzögert und somit ist der Bezug zur Garage für den Kunden nicht unbedingt vorhanden.

Das neue Verfahren verwendet als erste Schätzung zur Reichweitenprädiktion hauptsächlich aktuelle und zukünftige Wetter-Informationen, die online zugänglich sind (beispielsweise über Connect Dienste) und die von zuverlässigen Messstationen stammen. Sowohl Temperaturdaten als auch Schätzungen für den Leistungsbedarf des Thermomanagements können ebenfalls von anderen Fahrzeugen via Car-to-Car-Kommunikation stammen. Die eigenen Fahrzeugsensoren dienen zusätzlich zur feinen Anpassung der Schätzung.

Als Grundlage für die Reichweitenschätzung wird die tatsächliche Außentemperatur aus dem Internet oder auch über Car-to-Car-Kommunikation verwendet. Zusätzlich werden via Car-to-Car-Kommunikation empfangene Leistungsprädiktionen für das Thermomanagement anderer Fahrzeuge verwendet, wenn diese Fahrzeuge schon ausreichend lange fahren. Die prädiktierte Information anhand der externen Informationen der weiteren Kraftfahrzeuge muss bereits durch die fahrzeugeigene Sensorik der weiteren Kraftfahrzeuge validiert bzw. korrigiert sein, damit die Informationen also ausreichend zuverlässig sind. Dazu ist eine Mindestanzahl von Fahrzeugen notwendig.

Die mit eigenen Fahrzeugsensoren gemessene Temperatur wird dann zur langfristigen feinen Korrektur der Reichweitenprädiktion verwendet. Dazu wird beobachtet, inwieweit sich die vom Fahrzeug gemessene Temperatur und damit der Leistungsbedarf für das Thermomanagement an den zuvor mit externen Informationen prädiktierten Wert annähert. Finden dauerhaft größere Abweichungen statt, muss die Schätzung aus externen Informationen korrigiert werden.

Sollten zu bestimmten Zeiten keine Webdienste zur Verfügung stehen oder keine anderen Fahrzeuge zur Kommunikation verfügbar sein, dann kann die Reichweitenprädiktion rein auf Fahrzeugsensordaten als Fallback-Lösung verwendet werden.

## Patentansprüche

1. Verfahren zum Ermitteln einer Fahrtreichweite eines Kraftfahrzeugs (10) umfassend die Schritte:
- Empfangen von fahrzeugexternen Daten, wobei die fahrzeugexternen Daten zumindest einen Wetterparameterwert umfassen;
- Ermitteln eines fahrzeugabhängigen Parameterwertes in Abhängigkeit der fahrzeugexternen Daten;
- Bestimmen der Fahrtreichweite des Kraftfahrzeugs (10) in Abhängigkeit des fahrzeugabhängigen Parameterwertes, wobei
- die fahrzeugexternen Daten von mehreren weiteren Kraftfahrzeugen (18) bezogen werden;
**dadurch gekennzeichnet, dass**
die empfangenen fahrzeugexternen Daten vor dem Bestimmen des fahrzeugabhängigen Parameterwertes mittels einer Konfidenzschätzung überprüft werden, wobei die Konfidenzschätzung jeweils eine Fahrzeit der mehreren weiteren Kraftfahrzeuge und/oder eine Mindestanzahl der mehreren weiteren Kraftfahrzeuge berücksichtigt.

2. Verfahren nach Anspruch 1,
**dadurch gekennzeichnet, dass**
als der fahrzeugabhängige Parameterwert ein Energiebedarf pro Streckenabschnitt und/oder pro Zeiteinheit des Kraftfahrzeugs (10), insbesondere zur Kühlung und/oder Klimatisierung, bestimmt wird.

3. Verfahren nach Anspruch 1 oder 2,
**dadurch gekennzeichnet, dass**
der Wetterparameterwert eine Umgebungstemperatur charakterisiert.

4. Verfahren nach einem der vorhergehenden Ansprüche,
**dadurch gekennzeichnet, dass**
die fahrzeugexternen Daten mindestens einen Energiebedarf des weiteren Kraftfahrzeugs (18) pro Streckeneinheit und/oder pro Zeiteinheit umfassen.

5. Verfahren nach einem der vorhergehenden Ansprüche,
**dadurch gekennzeichnet, dass**
die fahrzeugexternen Daten weiterhin von einer Servervorrichtung (20) bezogen werden.

6. Verfahren nach einem der vorhergehenden Ansprüche,
**dadurch gekennzeichnet, dass**
nach dem Bestimmen der Fahrtreichweite des Kraftfahrzeugs (10) in Abhängigkeit des fahrzeugabhängigen Parameterwertes ein mit dem Wetterparameterwert korrespondierender aktueller Wetterparameterwert in einer Umgebung des Kraftfahrzeugs (10) erfasst wird, wobei zwischen dem erfassten aktuellen Wetterparameterwert und dem Wetterparameterwert ein Differenzwertwert bestimmt wird und der Wetterparameterwert an den erfassten aktuellen Wetterparameterwert angepasst wird, wenn der Differenzwert einen vorgegebenen Schwellwert überschreitet.

7. Verfahren nach Anspruch 6,
**dadurch gekennzeichnet, dass**
der aktuelle Wetterparameterwert durch eine Erfassungseinrichtung (14) des Kraftfahrzeugs (10) erfasst wird, wobei der aktuelle Wetterparameterwert eine Temperatur umfasst.

8. Kraftfahrzeug (10) umfassend:
- eine Empfangseinrichtung (12) zum Empfangen von fahrzeugexternen Daten, wobei die fahrzeugexternen Daten zumindest einen Wetterparameterwert umfassen;
- eine Auswerteeinrichtung (16), welche dazu eingerichtet ist, in Abhängigkeit der fahrzeugexternen Daten einen fahrzeugabhängigen Parameterwert zu ermitteln, wobei
- die Auswerteeinrichtung (16) ferner dazu eingerichtet ist, eine Fahrtreichweite des Kraftfahrzeugs (10) in Abhängigkeit des fahrzeugabhängigen Parameterwertes zu bestimmen;
- die fahrzeugexternen Daten von mehreren weiteren Kraftfahrzeugen (18) bereitgestellt sind;
**dadurch gekennzeichnet, dass**
die Auswerteeinrichtung (16) dazu eingerichtet ist, die empfangenen fahrzeugexternen Daten vor dem Bestimmen des fahrzeugabhängigen Parameterwertes mittels einer Konfidenzschätzung zu überprüfen, wobei die Konfidenzschätzung jeweils eine Fahrzeit der mehreren weiteren Kraftfahrzeuge und/oder eine Mindestanzahl der mehreren weiteren Kraftfahrzeuge berücksichtigt.

## Claims

1. Method for determining a driving range of a motor vehicle (10), comprising the steps of:
- receiving extra-vehicle data, wherein the extra-vehicle data comprise at least one weather parameter value;
- determining a vehicle-dependent parameter value depending on the extra-vehicle data;
- determining the driving range of the motor vehicle (10) depending on the vehicle-dependent parameter value, wherein
- the extra-vehicle data are obtained from multiple additional motor vehicles (18);
**characterised in that**
the received extra-vehicle data are verified using a confidence estimation before the vehicle-dependent parameter value is determined, wherein the confidence estimation takes into account a travel time for the multiple additional motor vehicles and/or a minimum number of the multiple additional motor vehicles.

2. Method according to claim 1,
**characterised in that**
an energy demand per route segment and/or per unit of time of the motor vehicle (10), in particular for cooling and/or climate control, is determined as the vehicle-dependent parameter value.

3. Method according to claim 1 or 2,
**characterised in that**
the weather parameter value characterises an ambient temperature.

4. Method according to any of the preceding claims,
**characterised in that**
the extra-vehicle data comprise at least one energy demand of the additional motor vehicle (18) per unit of distance and/or per unit of time.

5. Method according to any of the preceding claims,
**characterised in that**
the extra-vehicle data are further obtained from a server device (20).

6. Method according to any of the preceding claims,
**characterised in that**
after the driving range of the motor vehicle (10) has been determined depending on the vehicle-dependent parameter value, a current weather parameter value corresponding to the weather parameter value is detected in an environment of the motor vehicle (10), wherein a difference value between the detected current weather parameter value and the weather parameter value is determined, and the weather parameter value is adapted to the detected current weather parameter value if the difference value exceeds a predefined threshold value.

7. Method according to claim 6,
**characterised in that**
the current weather parameter value is detected by a detection apparatus (14) of the motor vehicle (10), wherein the current weather parameter value comprises a temperature.

8. Motor vehicle (10) comprising:
- a receiving apparatus (12) for receiving extra-vehicle data, wherein the extra-vehicle data comprise at least one weather parameter value;
- an evaluation apparatus (16) configured to determine a vehicle-dependent parameter value depending on the extra-vehicle data, wherein
- the evaluation apparatus (16) is further configured to determine a driving range of the motor vehicle (10) depending on the vehicle-dependent parameter value;
- the extra-vehicle data are provided by multiple additional motor vehicles (18);
**characterised in that**
the evaluation apparatus (16) is configured to verify the received extra-vehicle data using a confidence estimation before the vehicle-dependent parameter value is determined, wherein the confidence estimation takes into account a travel time for the multiple additional motor vehicles and/or a minimum number of the multiple additional motor vehicles.

## Revendications

1. Procédé de calcul d'une autonomie d'un véhicule automobile (10) comprenant les étapes :
- la réception de données externes au véhicule, dans lequel les données externes au véhicule comportent au moins une valeur de paramètre météorologique ;
- le calcul d'une valeur de paramètre dépendant du véhicule en fonction des données externes au véhicule ;
- la détermination de l'autonomie du véhicule automobile (10) en fonction de la valeur de paramètre dépendant du véhicule, dans lequel
- les données externes au véhicule concernent plusieurs autres véhicules automobiles (18) ;
**caractérisé en ce que**
les données externes au véhicule reçues sont vérifiées avant la détermination de la valeur de paramètre dépendant du véhicule au moyen d'une estimation de confiance, dans lequel l'estimation de confiance prend en compte respectivement un temps de trajet des plusieurs autres véhicules automobiles et/ou un nombre minimum des plusieurs autres véhicules automobiles.

2. Procédé selon la revendication 1,
**caractérisé en ce que**
un besoin en énergie par section de parcours et/ou par unité de temps du véhicule automobile (10), en particulier pour le refroidissement et/ou la climatisation est déterminé comme la valeur de paramètre dépendant du véhicule.

3. Procédé selon la revendication 1 ou 2,
**caractérisé en ce que**
la valeur de paramètre météorologique caractérise une température ambiante.

4. Procédé selon l'une quelconque des revendications précédentes,
**caractérisé en ce que**
les données externes au véhicule comportent au moins un besoin en énergie de l'autre véhicule automobile (18) par unité de parcours et/ou par unité de temps.

5. Procédé selon l'une quelconque des revendications précédentes,
**caractérisé en ce que**
les données externes au véhicule concernent en outre un dispositif de serveur (20).

6. Procédé selon l'une quelconque des revendications précédentes,
**caractérisé en ce que**
après la détermination de l'autonomie du véhicule automobile (10) en fonction de la valeur de paramètre dépendant du véhicule, une valeur de paramètre météorologique actuelle correspondant à la valeur de paramètre météorologique est détectée dans un environnement du véhicule automobile (10), dans lequel une valeur de différence est déterminée entre la valeur de paramètre météorologique actuelle détectée et la valeur de paramètre météorologique et la valeur de paramètre météorologique est adaptée à la valeur de paramètre météorologique actuelle détectée lorsque la valeur de différence dépasse une valeur seuil prédéfinie.

7. Procédé selon la revendication 6,
**caractérisé en ce que**
la valeur de paramètre météorologique actuelle est détectée par un dispositif de détection (14) du véhicule automobile (10), dans lequel la valeur de paramètre météorologique actuelle comporte une température.

8. Véhicule automobile (10) comprenant :
- un dispositif de réception (12) pour la réception de données externes au véhicule, dans lequel les données externes au véhicule comportent au moins une valeur de paramètre météorologique ;
- un appareil d'évaluation (16) qui est conçu afin de calculer une valeur de paramètre dépendant du véhicule en fonction des données externes au véhicule, dans lequel
- l'appareil d'évaluation (16) est de plus conçu afin de déterminer une autonomie du véhicule automobile (10) en fonction de la valeur de paramètre dépendant du véhicule ;
- les données externes au véhicule sont fournies par plusieurs autres véhicules automobiles (18) ;
**caractérisé en ce que**
l'appareil d'évaluation (16) est conçu afin de vérifier les données externes au véhicule reçues avant la détermination de la valeur de paramètre dépendant du véhicule au moyen d'une estimation de confiance, dans lequel l'estimation de confiance prend en compte respectivement un temps de trajet des plusieurs autres véhicules automobiles et/ou un nombre minimal des plusieurs autres véhicules automobiles.
